# EUROPEAN PATENT APPLICATION

(11) **EP 2 365 676 A1**
(43) Date of publication of application: **14.09.2011**
(21) Application number: 10156248.6
(22) Date of filing: 11.03.2010
(51) Int. Cl.: H04L 29/08, H04W 76/02

(54) **Methods of managing communication sessions between nfc devices, and an nfc device**

(71) Applicant: NXP B.V., 5656 AG Eindhoven (NL)
(72) Inventor: Kulkarni, Giten, Redhill, Surrey RH1 1DL (GB); Jogi, Sunil, Redhill, RH1 1DL (GB)
(74) Representative: Hardingham, Christopher Mark

(57) **Abstract**

Methods of managing communication sessions between NFC devices are disclosed, in which, upon interruption of a communication session, data associated with this session, is stored in a NFC device. Upon the re-establishment of communication between the devices, the stored information is used in order to the bypass or partly bypass one or more of the stages of establishing a communication session. Also disclosed is a NFC device configured to operate such methods.

## Description

### Field of the Invention

This invention relates to methods of managing communication sessions between Near Field Communication (NFC) devices. In particular, it relates to methods of re-establishing communication sessions which have been interrupted.

### Background of the Invention

Near field communication (NFC) is derived from RFID (radio frequency identification) technology, and involves proximal, or near field, communication between a pair of, that is to say two, devices. NFC can operate in either passive or active communication mode. In passive communication mode, an initiator (such as a card reader or proximity coupling device [PCD]) supplies the energy required for communication to and from an un-powered target (such as an RFID tag, smart card, or proximity card [PICC]), by means of an RF field. In active communication, the initiator and target both alternatively generate the RF field for communication. This mode is generally used for peer-to-peer communication, where both peer NFC devices have a power source.

NFC devices usually have a structured architecture comprising a physical layer, also known as an RF layer, which is responsible for modulation schemes and data rates for communication. Next, there is a media access control (MAC) layer, which is responsible for communication protocols such as single device detection or anti-collision and select sequence (which is carried out when initiating a communication session to ensure exclusivity for the pair of devices), protocol activation, and effecting the data exchange. The physical and MAC layers collectively determines which of several NFC radio technologies (such as NFC-A, NFC-B, and other proprietary technologies) are to be used. Finally, there are one or more upper layers (such as an application layer), which are responsible for the various possible applications such as ticketing, identification and information sharing, with which NFC is associated.

In either active or passive mode, it is possible for the communication between two devices to be broken. This can occur for many reasons, including poor radio transmission from the initiator (PCD), poor radio transmission from the target (PICC), or between NFC peer-to-peer devices, antenna tuning mismatch, the target going out of range due to movement or manual handling, peer devices going out of range due to movement or manual handling, loss of communication due to bad channel environment, and the like.

In known devices, the target is then considered to be lost, and an indication is passed to the upper (application) layer. As a result the application or upper layer re-initialises, and goes through a device selection process or anti-collision and select sequence or protocol activation again. Consequently, the context for the target is lost and it can take substantial time to get back to the original state when context was lost. Further, it is not guaranteed to find the same target first if multiple targets are present in radio range of the initiator. Some protocols even demand that the Unique identifier of the device be generated randomly every time RF field is detected; so if the interruption results in or from a switching off and on of the RF field then the application will never be able to determine which device it was working with before.

Also during establishment of communication (for instance during the anti-collision and select sequence according to the standard ISO 14443-3-4, the whole contents of which are incorporated herein by reference), the communication may be interrupted, as a result of which the anti-collision and select sequence or protocol activation is restarted - again resulting in a delay.

There is thus a need for a method of re-establishing the communication session which does not necessarily involve such a considerable delay.

### Summary of the invention

According to a first aspect of the present invention, there is provided a method of managing an interruption to a communication session between first and second near field communication devices, the method comprising detecting an interruption of the communication session, storing information associated with the communication session in the first device, and using the stored information to re-establish the session. It is thereby not required to restart or re-establish the communication completely from the starting point.

In embodiments the near field communication devices have an application layer, a MAC layer and an RF layer, and the method is transparent to the application layer. Thus the application does not need to be concerned whether there is an interruption to the communication.

In embodiments the stored information is used to bypass steps which would otherwise be required to re-establish the communication session between the first and second near field communication devices. This can be more efficient than having to determine the information afresh.

In embodiments, the first and second devices are configured to operate according to the NFC-A protocol, the interruption occurs during single device detection or anti-collision and select sequence, the information associated with the session comprises a cascade level [nb could null], at least one of a unique identifier (UID) of the second device and a partial unique identifier (partial_UID) of the second device, and a last command (SEL) for which a response has not been received, further comprising the first device sending at least one REQA command, receiving a ATQA response, restoring the stored cascade level, going to the restoring cascade level, retrieving and resending the last command for which a response has not been received (SEL), receiving a further unique identifier or partial unique identifier, and in response to the further unique identifier or partial unique identifier being the same as the respective unique identifier (UID) of the second device and a partial unique identifier (partial_UID) of the second device, completing the respective single device detection or anti-collision and select sequence.

In embodiments, the first and second devices are configured to operate according to the NFC-B protocol, the interruption occurs during single device detection or anti-collision and select sequence, the information associated with the session comprises a pseudo unique identifier of the second device (PUPI), and a last command (ATTRIB) for which a response has not been received, further comprising the first device sending at least one REQB command, receiving a ATQB response including a further pseudo unique identifier, in response to the further pseudo unique identifier being the same as the stored unique identifier (PUPI), retrieving and resending the last command for which a response has not been received.

In embodiments the information associated with the communication session comprises at least a discovered Target ID, and a last sent item (PSL_REQ, Data). These embodiment particularly address arrangements wherein the first and second devices are configured for peer-to-peer operation in active communication.

In embodiments, the interruption occurs during a single device detection procedure, and the last sent item is a PSL_REQ, further comprising the first device sending at least one ATR_REQ command, and in response to receiving a ATR_RSP response including a further ID Target: firstly, comparing the further ID target with the discovered ID Target and secondly, in response to the further ID target being the same as the discovered ID target, retrieving and resending the PSL_REQ.

In embodiments, the interruption occurs during a data exchange, the information associated with the communication session comprises PSL_RES, and the last sent item is a data item, further comprising the first device sending at least one ATR_REQ command, and in response to receiving a ATR_RSP response including a further ID Target: firstly, comparing the further ID target with the discovered ID Target, and secondly, in response to the further ID target being the same as the discovered ID target, restoring PSL_RES and resending the last sent data item.

In other embodiments, the first and second devices are configured to operate according to the NFC-A protocol, the information associated with the communication session comprises at least the unique identifier of the second device (UID), and the last sent item (RATS, PPS Request, Data).

In embodiments, the interruption occurs during a protocol activation, and the last sent item is a RATS command, further comprising the first device sending at least one REQA command, and in response to receiving a ATQA response including a further unique identifier: firstly, comparing the further unique identifier with the unique identifier of the second device, and secondly, in response to the further unique identifier being the same as the unique identifier of the second device, continuing the protocol activation and resending the saved RATs command.

In embodiments, the interruption occurs during a protocol activation, the information associated with the communication session includes an ATS, and the last sent item is a PPS Request command, further comprising the first device sending at least one REQA command, and in response to receiving a ATQA response including a further unique identifier, firstly, comparing the further unique identifier with the unique identifier of the second device, and secondly, in response to the further unique identifier being the same as the unique identifier of the second device, retrieving the saved ATS and resending the saved PPS Request command.

In embodiments, the interruption occurs during data exchange, the information associated with the communication session includes an ATS and a PPS Response, and the last sent item is a data item, further comprising the first device sending at least one REQA command and in response to receiving a ATQA response including a further unique identifier: firstly, comparing the further unique identifier with the unique identifier of the second device, and secondly, in response to the further unique identifier being the same as the unique identifier of the second device, retrieving the saved ATS, retrieving the PPS Response, and resending the saved data item.

In embodiments, the first and second devices are configured to operate according to the NFC-B protocol, and the information associated with the communication session comprises at least the pseudo unique identifier of the second device (PUPI), and the last sent item (Data).

In embodiments, the interruption occurs during data exchange, the information associated with the communication session includes a unique identifier, and the last sent item is a data item, further comprising the first device sending at least one REQB command, and in response to receiving a ATQB response including a further pseudo unique identifier: firstly, comparing the further unique identifier with the pseudo unique identifier of the second device, and secondly, in response to the pseudo further unique identifier being the same as the pseudo unique identifier of the second device, and resending the saved data item.

According to another aspect of the present invention, there is provided a near field communication device configured to operate a method as described above.

These and other aspects of the invention will be apparent from, and elucidated with reference to, the embodiments described hereinafter.

### Brief description of Drawings

Embodiments of the invention will be described, by way of example only, with reference to the drawings, in which
Fig. 1 shows a typical NFC architecture;
Figure 2 shows a simplified process for establishing a data session between two NFC devices, according to known methods;
Figure 3 shows a simplified process for establishing a data session between two NFC devices, wherein data from a failed session is used to bypass some steps or parts of steps in re-establishing a session;
Figure 4 is a flow diagram of a process according to ISO 14443-3A;
Figure 5 is a flow diagram of a process according to ISO 14443-3B;
Figure 6 is a flow diagram of a process according to ISO 14443-4; and
Figure 7 is a flow diagram of a process for establishing communication under peer-to-peer NFC.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments

### Detailed description of embodiments

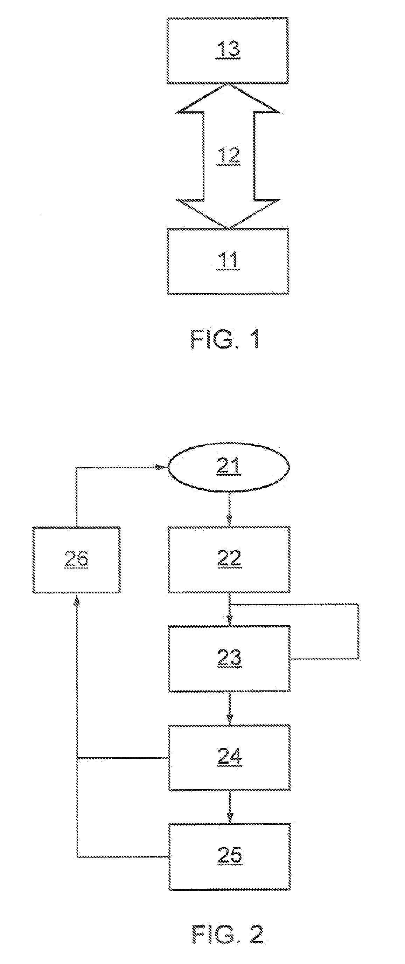

A typical NFC architecture is shown in Figure 1, and comprises a physical, or RF, layer 11. The physical layer 11 may implement various transmission standards such as ISO 18092, or ISO 14443 (type A, type B), or Felica. A MAC or media access control layer 12 sits between the physical layer 11 and an application layer 13. The MAC layer solves the problem of interference which could otherwise occur were more than one initiators or targets attempt to communicate at the same time. The solution is called anti-collision mechanism or single device detection. Various standardised mechanisms and proprietary mechanisms are known, and can be incorporated in the MAC.

A simplified flowchart for establishing and maintaining a communication session between two NFC, devices according to known methods, is shown in figure 2. In a first step 21, the first powered NFC device (initiator) commences searching for targets devices. Once the initiator receives a signal indicating the presence of at least one target device (shown at box 22), it initiates a single device detection protocol or anti-collision and select sequence (shown at 23). Once this is established, protocol activation is carried out, shown at 24. Protocol activation is followed by data exchange protocol, at 25. The data exchange format is dependent on the application requirements.

As shown in figure 2, whenever communication between the two devices is broken, either during data exchange at 25, or during initiation at 23 or 24, the application is notified at 26, and the whole process is reset and restarted.

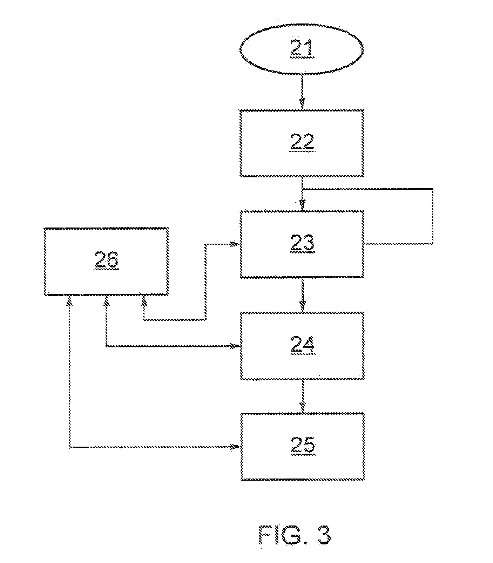

A simplified flowchart for establishing and maintaining a communication session between two NFC devices according to embodiments of the invention is shown in figure 3. Absent any interruption to the communication, the flow is the same as that shown in figure 2 relating to known methods. However, if an interruption in the communication between the two NFC devices is detected, typically due to the failure of the target device (PICC) to response to a command or acknowledge a data transfer, the state machine controlling the operation of the initiator (PCD) is frozen, and various parameters associated with the particular communication session, such as the unique identifier (UID) of the target where it is known, are cached or stored in a memory of the initiator. This is shown at box 26. A recovery mechanism is then put in operation, in which communication is re-established, but instead of restarting the communication session of from scratch, the stored data is used to bypass stages, or partial stages, of initiation. Control can thus resume at the same stage at which is was lost, as depicted by the double headed arrows in figure 3.

It will be appreciated that interruption to communication can occur at several different stages of a communication session. The details of the recovery will be dependent on the stage at which the interruption occurred, and on the NFC protocol which is in use.

Embodiments of the invention will now be described with reference to several different NFC protocols and interruptions occurring at various stages of the communication session.

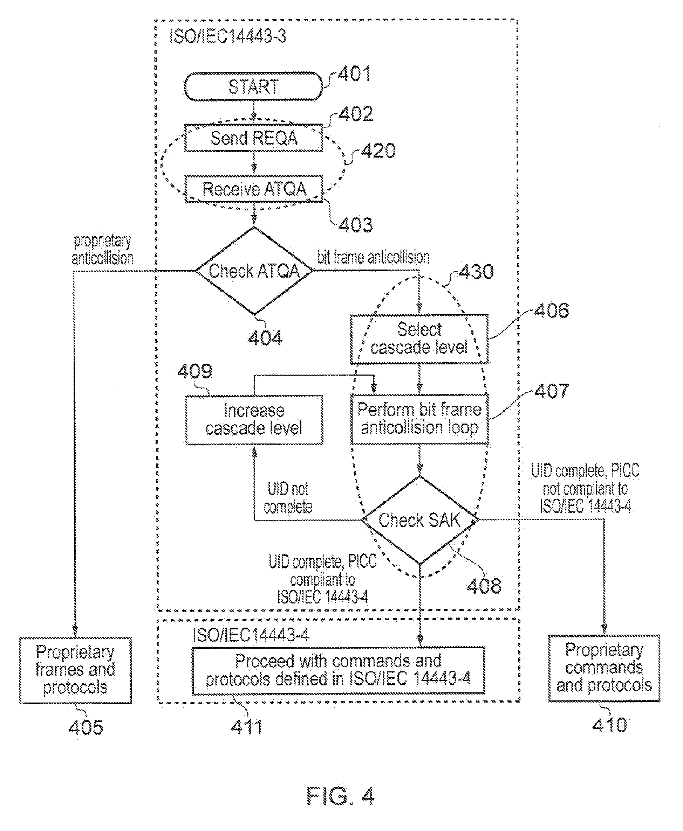

Figure 4 shows a flow diagram of a first stage of establishing a data session, according to ISO 14443-3. At the start of the process 401, the initiator sends a request command type-A (REQA) at 402 and receives an answer to request type-A (ATQA) as 403. The answer to request type-A is checked at 404 and if it is determined that a proprietary anti- collision protocol is in use, control moves to proprietary frames and protocols at 405. If, however it is determined from the answer to the request Type-A 404 that bit frame anti-collision is in use, the cascade level is selected at 406 following which a bit frame anti-collision loop 407 is initiated. The select acknowledge (ACK) is checked 408 and if it is found that the unique identifier (UID) of the target is not complete, the cascade level is increased at 409 and control returns to the bit frame anti-collision loop at 407. If the unique identifier (UID) is complete, and it is found that the target (PICC) is not compliant to ISO 14443-4, control moves to proprietary commands and protocols 410. Conversely, if the unique identifier is complete and the target is found to be compliant with ISO 14443-4, control proceeds with command and protocols as defined in ISO 14443-4, as shown in box 411.

As shown at 420, sending the request type-A, at 402 (or, equivalently, a wake-up command Type-A, (WUPA)), may not result in a response at 403, if the communication is interrupted. In this case, the command can simply be retransmitted. However, if there is no response for the select command (SEL) sent by the initiator during any cascade level, this is interpreted as the target (PICC) being either in an IDLE state or a POWER OFF state, even though the initiator may already have partial or complete information about the target (for instance, the UID). When the target is in the IDLE or POWER OFF state, the information is retrieved again, once the target is connected. Furthermore, the complete process is repeated during anti-collision. According to known methods information from the failed session is not used for the new session.

According to embodiments of the invention, information from the failed session is reused for the new session, thus resulting in time-saving. First of all, the state machine of the initiator is frozen, and information which has already been established is saved. This may include for instance a cascade level (it is noted that if no cascade level has been established, then a null result may be saved as a cascade level), any discovered unique identifier or partial unique identifier, and in particular the last command (SEL) which a response was not received. The request command type-A (REQA) is sent, and a response to request (ATQA) awaited. If no response is received then the request (REQA) may be resent up to N times, where N is predetermined, and may be implementation specific or infinite. If no response is received after the predetermined number of retries, the implementation-specific way of time-based backoff can be used by the initiator, or it can decide not to retry again, or any other method or decision for further action, can be used. Once a response is received, and confirmed to be a type-A response (ATQA), the cascade level is restored from that saved, and the select command, which is retrieved from that saved, is resend and the anti-collision process is continued: if the same unique or partial unique identifier is not received then another target is sending the response, and this is handled in the conventional manner; the if the same unique identifier or partial unique identifier is received the initiator's state machine proceeds, to complete the anti-collision and continue operation.

Thus according to embodiments of the invention handling a first scenario, the following procedure is carried out:
● Freeze the PCD state machine.
   o Save successful cascade level if any as Cascade_Level_Saved
   o Save discovered UID or partial UID as UID-Saved
   o Save last command (SEL) for which response is not received as SEL_Saved
● Send REQA command and wait for response as ATQA
● If no response is received then resent REQA for N time, where N is implementation specific or infinite till ATQA in response is received.
● If response is received as ATQA
   o Restore cascade level from Cascade_Level_Saved
   o Go to the restore cascade level directly
   o Send SEL command from SEL_Saved and continue anti-collision
      ■ If same UID or partial UID is not received
         ● Some other PICC is sending response. Either reset the PCD state machine or retry sending REQA again.
      ■ If same UID or partial UID is received
         ● Continue PCD state machine and complete the anti-collision, continue with operation.

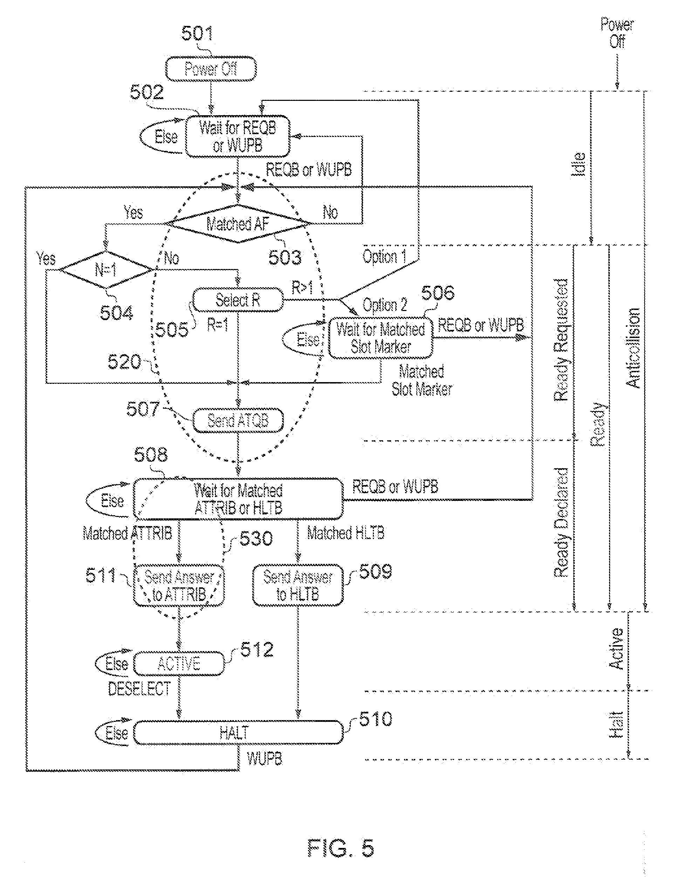

A second scenario in which an interruption can occur is shown in Figure 5. Figure 5 shows part of the process for establishing a communication session, according to ISO 14443-3B, the entire contents of which are incorporated herein by reference, and will be well known to the skilled person. From a Power Off state 501, it is waited for REQB/WUPB at 502, on receipt of which it is checked at 503 whether there is a matched application family identifier (AFI). If there is, it is checked that it is unique (N=1) at 504, and if not, and if R>1 at 505 either the processor is restarted or the loop waiting for a matched slot marker entered at 506. If either the AFI is unique or R is 1 an answer to request type-B (ATQB) is sent at 507. At 508 a matched target selection command (ATTRIB) or halt command, type B (HLTB) is awaited. If a halt command is received, it is answered at 509 and the process halted at 510. If a matched target selection command is received, an answer is sent at 511, and the target is made active at 512.

Once again, as shown at 520, when that the initiator (PCD) sends a request, or wakeup, type B (REQB/WUPB), the target (PICC) is in an IDLE state. If there is no response to the request, then it can be retransmitted without change in the target's state. However, if there is no response to the target selection command type-B (ATTRIB), sent by the initiator, then the target is either in an idle state or Power off state. In this case the anti-collision and information gathering (such as application family identifier - AFI) is, according to known methods, required to be done again when the target connects again. Information from the failed session is not used for the new session.

In this scenario, the following flowchart illustrates embodiments of the invention in which the information from the failed session may be reused to speed up the establishing of the new session. The skilled person will appreciate that PUPI refers to a pseudo-unique target identifier, type-B.
● Freeze the PCD state machine.
   o Save discovered PUPI as PUPI-Saved
   o Save last command (ATTRIB) for which response is not received as ATTRIB_Saved
●Send REQB command and wait for response as ATQB
● If no response is received then resent REQB for N time, where N is implementation specific or infinite till ATQB in response is received.
● If response is received as ATQB
   o Check the PUPI with PUPI_Saved, if both are same, or select the ATQB with same PUPI
      ■ If not found
         ● Either reset the PCD state machine or retry sending REQB again.
      ■ If found
         ● Send the ATTRIB command as per ATTRIB_Saved
         ● Continue PCD state machine and continue with operation.

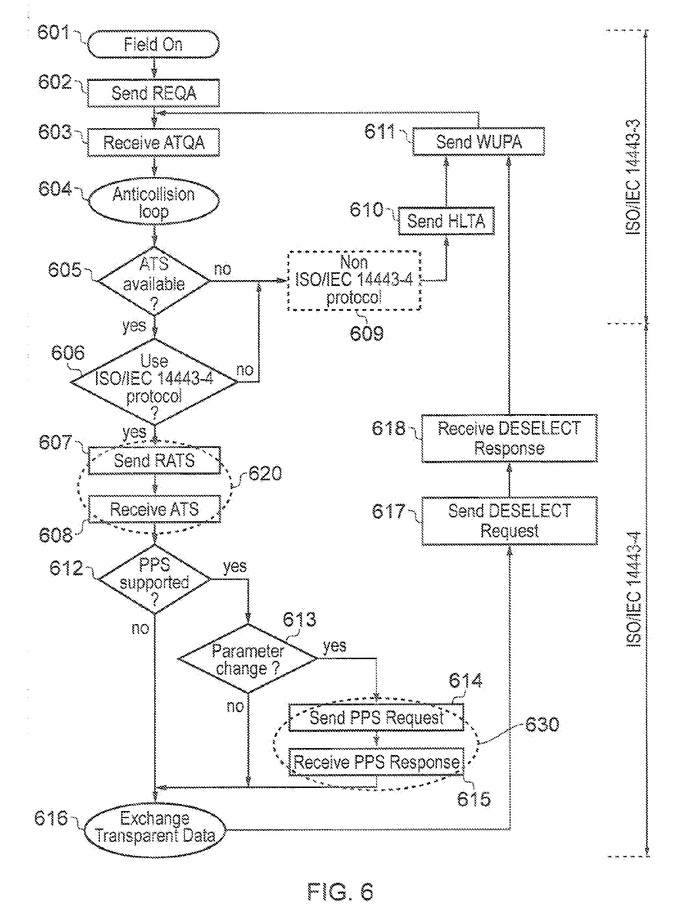

Third and fourth scenarios in which methods according to embodiments of the invention can be usefully employed is shown in figure 6. This figure is a flowchart according to ISO 14443-4, the entire contents of which will be familiar to the skilled person, and the whole contents of which are incorporated herein by reference. The figure shows the protocol activation through parameter exchange and application data transfer for type-A NFC devices. The data exchange protocol can be used for an application layer transfer over a contact-less link for both type-A and type-B NFC devices.

From the starting point of 601 when the field is on, the initiator sends a request at 602 (REQA), upon receipt of an answer at 603 (ATQA), the process carries out an anti-collision loop at 604. Provided an answer to select is available (ATS) as shown at 605, and it has been confirmed that the ISO 14443-4 protocol is complied with, as shown at 606, a request for an answer to select (RATS) is sent at 607 and an answer awaited, shown as ATS received at 608. Otherwise, it is determined that protocol is non-IS014443-4 compliant, as shown at 609, and a halt command (HLTA), by a wakeup call is shown at 611 as a type-A wakeup (WUPA). Following receipt of a response 608 to the RATS command 607, it is checked at 612 whether the communication is 'protocol and parameter selection' compliant (PPS supported). If yes and a parameter change is required as shown at 613, a 'protocol and parameter selection' request is sent at 614 and a response at 615 awaited. At the end of this process, transparent data exchange is in labelled as shown at 616. At the end of the exchange a deselect request can be sent at 617 and a response received at 618.

Interruption of communication is possible during the request for select, RATS, 607 and awaiting for and receipt of the answer 608. This part of the procedure is shown ringed at 620. Furthermore, during the sending and receipt of PPS request and response, 614 and 615 respectively a similar interruption of communication could be experienced as shown ringed at 630.

In the third scenario, if there is no response to the RATS command sent by the initiator to get the parameters from the target (highlighted at 620), according to the known methods, the initiator (PCD) has to perform anti-collision and initialisation again. Note that it would even be possible for the initiator to select a difference target in the new anti-collision sequence. A collision from the failed session is not conventionally used for the new session. According to embodiments of the invention, data from of the failed session may be reused to speed up the re-establishment of the new session.

The process flow according to embodiments of the invention is:
● Freeze the PCD state machine.
   o Save discovered PICC's UID as UID_Saved
   o Save last sent command (RATS) as RATS_Saved
   o Send REQA command and wait for response as ATQA
● If no response is received then resent REQA for N time, where N is implementation specific or infinite till ATQA in response is received.
● If response is received as ATQA
   o Check UID with UID Saved,
      ● If same UID not received
         ● Some other PICC is sending response. Either reset the PCD state machine or retry sending REQA again.
      ● If same UID is received
         ● Complete the anti-collision
         ● Send RATS command from saved RATS_Saved and wait for the response ATS
         ● Continue operation

Also highlighted in figure 6, at 630, is the potential interruption point where in a PPS request is sent at 614 and a response is awaited at 615. In this case, according to known methods, the initiator has to perform anti-collision, initialisation and send RATS again. Once again, it would be possible that the initiator could select a different target. According to further embodiments of the invention it is possible to reuse the information which is derived from the failed, session in order to speed up the re-establishment of a new session.

A detailed process flow to effect this is as follows:
● Freeze the PCD state machine.
   o Save discovered PICC's UID as UID_Saved
   o Save received ATS as ATS_Saved
   o Save last sent command (PPS Request) as PPS_Request_Saved
● Send REQA command and wait for response as ATQA
● If no response is received then resent REQA for N time, where N is implementation specific or infinite till ATQA in response is received.
● If response is received as ATQA
   o Check UID with UIO_Saved,
      ● If same UID not received
         ● Some other PICC is sending response. Either reset the PCD state machine or retry sending REQA again.
      ● If same UID is received
         ● Restore information of ATS from ATS_Saved
         ● Send PPS Request command from saved PPS_Request_Saved and wait for the response PPS Response
         ● Continue operation

The embodiments already described relate in particular to passive NFC, involving pairs of NFC devices in which there is an initiator and a target. Other embodiments of the invention relate more particularly to active NFC in which NFC devices are used in peer-to-peer mode.

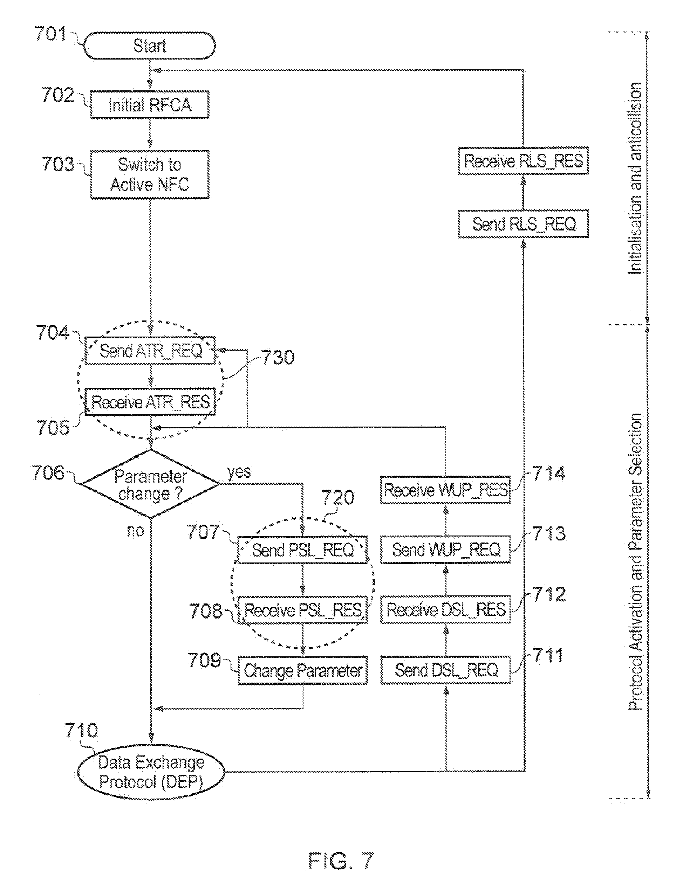

Figure 7 shows part of a process flow for establishing peer-to-peer communication. During a peer-to-peer single device detection, an NFC device may send an attribute request (ATR_REQ), and receive a collided response indicating that there are more than one NFC devices responding to the request. The single device detection procedure selects a unique peer for the NFC device.

From a starting position 701, in an initial RF collision avoidance (RFCA) state 72, the device is switched to active NFC mode at 703, sends an attribute request at 704 and awaits an attribute response at 705. If a parameter change is required, which is checked at 706, the device sends a parameter selection request (PSL_REQ) and awaits a parameter selection response at 708, upon receipt of which it changes the parameter at 709, and then enters data exchange protocol (DEP) at 710. In order to conclude the communication, the device sends a de-selection request (DSL_REQ) at 711 and awaits for a de-selection response (DSL_REQ) at 712. It then sends wake-up request at 713 and awaits a wake up response at 714.

A fifth scenario, which may benefit from methods according to embodiments of the invention, occurs during the above process when the initiator NFC device sends a parameter selection request (PSL_REQ) to target, and awaits response, as highlighted at 720. If no response is received from the targets, then it is assumed that the target is out of range or not powdered any more, and thus not a selected peer. In known methods NFC devices have to go through single device detection or anti-collision again and information gathered during the failed session is not new used for the new session. According to embodiments of the invention again the information previously gathered is saved in the initiator NFC device, and re-used to speed up the re-establishment of the communication session. A detailed process flow according to embodiment of the invention is as follows:
● Freeze the initiator's state machine.
   o Save discovered Target ID as Target_ID_Saved
   o Save last sent command (PSL_REQ) as PSL_REQ_Saved
● Send ATR_REQ command and wait for response as ATR_RES
● During this do not respond for ATR_REQ from any other NFC device.
● If no response is received then resent ATR_REQ for N time, where N is implementation specific or infinite till ATR_RSP in response is received.
● If response is received as ATR_RSP
   o Check the Target ID with Target_ID_Saved, if both are same, or select the target with same Target ID
      ■ If not found
         ● Some other target is sending response. Either reset the initiator state machine or retry sending ATR_REQ again.
      ■ If found
         ● Send PSL_REQ command from saved PSL_REQ_Saved and wait for the response PSL_RSP
         ● Continue operation

Sixth and Seventh scenarios: the embodiment described so far have related to interruption of the communication between the two devices during the establishment of a data exchange succession. During the data exchange, the initiator sent state and the target response if he acknowledgements (either ACK or NACK, depending on whether it is a positive or negative acknowledgement). However should neither acknowledgement be received, this is interpreted as the target carrying out of range. According to known methods, in order to be able to exchange more data, the initiator has to go through the single device detection or anti-collision transport parameter exchanges again, and does not reuse the information associated with the failed communication session.

In the first of these scenarios, the detailed implementation of embodiments of the invention will vary between type-A and type-B NFC; for type-A NFC the process flow is as follows
- Freeze the PCD state machine.
   o Save discovered PICC's UID as UID-_Saved
   o Save received ATS as ATS_Saved
   o Save received PPS Response as PPS_Response_Saved
   o Save last sent Data as Data_Saved
- Send REQA command and wait for response as ATQA
- If no response is received then resent REQA for N time, where N is implementation specific or infinite till ATQA in response is received.
- If response is received as ATQA
   o Check UID with UID Saved,
      ■ If same UID not received
         • Some other PICC is sending response. Either reset the PCD state machine or retry sending REQA again.
      ■ If same UID is received
         • Restore information of ATS from ATS Saved
         • Restore information of PPS Response from PPS_Response_Saved
         • Send Data from saved Data_Saved and wait for the response
         • Continue operation

The corresponding detailed process flow for type-B NFC is as follows:
• Freeze the PCD state machine.
   o Save discovered PICC's PUPI as PUPI_Saved
   o Save sent ATTRIB command as ATTRlB_Saved
   o Save last sent Data as Data_Saved
• Send REQB command and wait for response as ATQB
• If no response is received then resent REQB for N time, where N is implementation specific or infinite till ATQB in response is received.
• If response is received as ATQB
   o Check the PUPI with PUPl_Saved, if both are same, or select the ATQB with same PUPI
      ■ If not found
         • Some other PICC is sending response. Either reset the PCD state machine or retry sending REQB again.
      ■ If found
         • Restore information of ATTRIB from ATTRIB Saved
         • Send Data from saved Data-Saved and wait for the response
         • Continue operation

A flow charting according to an embodiment of the invention which addresses the seventh scenario is given in the following process-flow:
• Freeze the initiator's state machine.
   o Save discovered Target ID as Target_ID_Saved
   o Save information from PSL_RES as PSL_RES_Saved
   o Save last sent Data as Data_Saved
• Send ATR_REQ command and wait for response as ATR_RES
• During this do not respond for ATR_REQ from any other NFC device.
• If no response is received then resent ATR_REQ for N time, where N is implementation specific or infinite till ATR_RSP in response is received.
• If response is received as ATR_RSP
   o Check the Target ID with Target_ID_Saved, if both are same, or select the target with same Target ID
      ■ If not found
         • Some other target is sending response. Either reset the initiator state machine or retry sending ATR_REQ again.
      ■ If found
         • Restore information of PSL_RES from PSL_RES_Saved
         • Send Data from saved Data_Saved and wait for the response
         • Continue operation

The skilled person will appreciate that according to embodiments of the invention, the application layer need not be notified, or even become aware, of the temporary communication failure. The restoration or re-establishment of the communication session may be handled entirely by the lower layers, being the physical and the MAC layer. Furthermore, embodiments of the invention are also beneficial in insuring that the same target ease prepared with the initiator in the case of the presence of multiple targets. The information relating to the failed session may be cached in readily accessible memory within the initiator device. Moreover, since the embodiments of the invention do not involve modification of any frame format or the introduction of any new frame, the embodiments are interoperable with existing NFC devices.

The embodiments above have been described with reference to existing NFC protocols. However, the invention is not limited thereto, and the skilled person will appreciate that the invention also embraces other communication devices such as RFID, which may implement only a sub-set of the device functionalities or protocols of known NFC devices.

In summary then, there are herein disclosed methods of managing communication sessions between NFC devices, in which, upon interruption of a communication session, data associated with this session, is stored in a NFC device. Upon the re-establishment of communication between the devices, the stored information is used in order to the bypass or partly bypass one or more of the stages of establishing a communication session. Also disclosed is a NFC device configured to operate such methods.

From reading the present disclosure, other variations and modifications will be apparent to the skilled person. Such variations and modifications may involve equivalent and other features which are already known in the art of near field communication, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

For the convenience of the reader there now follows a list of abbreviations and acronyms used hereinabove:

| Abbreviation | Description |
|---|---|
| ACK | Acknowledgement |
| AFI | Application Family Identifier. Card preselection criteria by application, Type B |
| ATQA | Answer To Request, Type A |
| ATQB | Answer To Request, Type B |
| ATR | Attribute Request and Attribute Response |
| ATS | Answer To Select |
| ATTRIB | PICC selection command, Type B |
| DEP | Data Exchange Protocol |
| DSL | Deselect Request and Deselect Response |
| ECMA | European Computer Manufacturers Association |
| HLTA | HALT Command, Type A |
| HLTB | HALT Command, Type B |
| ISO | International Organization for Standardization |
| NACK | Negative Acknowledgement |
| NFC | Near Field Communication |
| PCD | Proximity Coupling Device |
| PICC | Proximity Card |
| PPS | Protocol and Parameter Selection |
| PSL | Parameter Selection Request and Parameter Selection Response |
| PUPI | Pseudo-Unique PICC Identifier, Type B |
| RATS | Request for Answer To Select |
| REQA | Request Command, Type A |
| RF | Radio Frequency |
| RFID | Radio Frequency Identification |
| SAK | Select Acknowledge |
| SEL | Select code, Type A |
| UID | Unique Identifier, Type A |
| WUPA | Wake-UP Command, Type A |
| WUPB | Wake-UP Command, Type B |

## Claims

1. A method of managing an interruption to a communication session between first and second near field communication devices, the method comprising
- detecting an interruption of the communication session,
- storing information associated with the communication session in the first device, and
- using the stored information to re-establish the session.

2. The method of claim 1 wherein the near field communication devices have an application layer, a MAC layer and an RF layer, and the method is transparent to the application layer.

3. The method of claim 1 or 2, wherein the stored information is used to bypass steps which would otherwise be required to re-establish the communication session between the first and second near field communication devices.

4. The method of any of claims 1 to 3, wherein the first and second devices are configured to operate according to the NFC-A protocol, the interruption occurs during single device detection or anti-collision and select sequence, the information associated with the session comprises a cascade level, at least one of a unique identifier (UID) of the second device and a partial unique identifier (partial_UID) of the second device, and a last command (SEL) for which a response has not been received, further comprising the first device
- sending at least one REQA command,
- receiving a ATQA response
- restoring the stored cascade level,
- going to the restoring cascade level,
- retrieving and resending the last command for which a response has not been received (SEL),
- receiving a further unique identifier or partial unique identifier, and
- in response to the further unique identifier or partial unique identifier being the same as the respective unique identifier (UID) of the second device and a partial unique identifier (partial_UID) of the second device, completing the respective single device detection or anti-collision and select sequence.

5. The method of any of claims 1 to 3, wherein the first and second devices are configured to operate according to the NFC-B protocol, the interruption occurs during single device detection or anti-collision and select sequence, the information associated with the session comprises a pseudo unique identifier of the second device (PUPI), and a last command (ATTRIB) for which a response has not been received, further comprising the first device
- sending at least one REQB command,
- receiving a ATQB response including a further pseudo unique identifier,
- in response to the further pseudo unique identifier being the saem as the stored unique identifier (PUPI), retrieving and resending the last command for which a response has not been received.

6. The method of any of claims 1 to 3, wherein the information associated with the communication session comprises at least a discovered Target ID, and a last sent item (PSL_REQ, Data).

7. The method of claim 6, wherein the interruption occurs during a single device detection procedure, and the last sent item is a PSL_REQ, further comprising the first device
- sending at least one ATR_REQ command, and
- in response to receiving a ATR_RSP response including a further ID Target:
- firstly, comparing the further ID target with the discovered ID Target and
- secondly, in response to the further ID target being the same as the discovered ID target, retrieving and resending the PSL_REQ.

8. The method of claim 6, wherein the interruption occurs during a data exchange, the information associated with the communication session comprises PSL_RES, and the last sent item is a data item, further comprising the first device
- sending at least one ATR_REQ command, and
- in response to receiving a ATR_RSP response including a further ID Target:
- firstly, comparing the further ID target with the discovered ID Target, and
- secondly, in response to the further ID target being the same as the discovered ID target, restoring PSL_RES and resending the last sent data item.

9. The method of any of claims 1 to 3, wherein
- the first and second devices are configured to operate according to the NFC-A protocol,
- the information associated with the communication session comprises at least the unique identifier of the second device (UID), and the last sent item (RATS, PPS Request, Data).

10. The method of claim 9, wherein the interruption occurs during a protocol activation and the last sent item is a RATS command, further comprising the first device
- sending at least one REQA command, and
- in response to receiving a ATQA response including a further unique identifier:
- firstly, comparing the further unique identifier with the unique identifier of the second device, and
- secondly, in response to the further unique identifier being the same as the unique identifier of the second device, continuing the protocol activation and resending the saved RATs command.

11. The method of claim 9, wherein the interruption occurs during a protocol activation, the information associated with the communication session includes an ATS, and the last sent item is a PPS Request command, further comprising the first device
- sending at least one REQA command, and
- in response to receiving a ATQA response including a further unique identifier,
- firstly, comparing the further unique identifier with the unique identifier of the second device, and
- secondly, in response to the further unique identifier being the same as the unique identifier of the second device, retrieving the saved ATS and resending the saved PPS Request command.

12. The method of claim 9, wherein the interruption occurs during data exchange, the information associated with the communication session includes an ATS and a PPS Response, and the last sent item is a data item, further comprising the first device
- sending at least one REQA command and
- in response to receiving a ATQA response including a further unique identifier:
- firstly, comparing the further unique identifier with the unique identifier of the second device, and
- secondly, in response to the further unique identifier being the same as the unique identifier of the second device, retrieving the saved ATS, retrieving the PPS Response, and resending the saved data item.

13. The method of any of claims 1 to 3, wherein
- the first and second devices are configured to operate according to the NFC-B protocol, and
- the information associated with the communication session comprises at least the pseudo unique identifier of the second device (PUPI), and the last sent item (Data).

14. The method of claim 13, wherein the interruption occurs during data exchange and the last sent item is a data item, further comprising the first device
- sending at least one REQB command, and
- in response to receiving a ATQB response including a further pseudo unique identifier:
- firstly, comparing the further unique identifier with the pseudo unique identifier of the second device, and
- secondly, in response to the pseudo further unique identifier being the same as the pseudo unique identifier of the second device, resending the saved data item.

15. A near field communication device configured to operate a method according to any preceding claim.
